# EUROPEAN PATENT APPLICATION

(11) **EP 3 238 955 A1**
(43) Date of publication of application: **01.11.2017**
(21) Application number: 17168082.0
(22) Date of filing: 25.04.2017
(51) Int. Cl.: B60C 7/10, B60C 19/00, B60C 5/00, B60C 15/06, B60C 17/06

(54) **TIRE WITH REDUCED WEIGHT**

(30) Priority: 26.04.2016 US 201662327582 P
(71) Applicant: The Goodyear Tire & Rubber Company, Akron, OH 44316 (US)
(72) Inventor: SPORTELLI, Francesco, 3249 Bettembourg (LU); BONNET, Gilles, 9176 Niederfeulen (LU); WILMS, Stefan, 7373 Helmdange (LU)
(74) Representative: Kutsch, Bernd

(57) **Abstract**

A tire (10) is disclosed having an axis of rotation and comprising two bead structures for attachment to a vehicle rim (70), a carcass-like structure (22), a tread (12) disposed radially outward of the carcass-like structure (22) and a shear band structure (16) disposed radially between the carcass-like structure (22) and the tread (12). At least one or both of the two bead structures (28a, 28b) include at least one layer of a foam material (100b).

## Description

### Field of the Invention

The present invention relates to a tire, and more particularly, to a radial passenger tire or a high-performance tire having a lightweight foam component.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

### Summary of the Invention

The invention relates to a tire in accordance with claim 1.

Dependent claims refer to preferred embodiments of the invention.

A tire in accordance with a preferred aspect of the present invention includes two inextensible annular bead structures for attachment to a vehicle rim, a carcass-like structure having at least one reinforced ply, the carcass-like structure being preferably wound about the two bead structures, a tread disposed radially outward of the carcass-like structure, and a shear band structure disposed radially between the carcass-like structure and the tread. One or both of the two bead structures includes at least one layer of a lightweight foam material. Preferably, the bead structures include two inextensible annular beads.

According to another preferred aspect of the tire, open cells of the lightweight material are maintained by axially extending walls.

According to still another preferred aspect of the tire, the tire is a pneumatic tire.

According to yet another preferred aspect of the tire, the tire is a non-pneumatic tire.

According to still another preferred aspect of the tire, the at least one layer further comprises an adhesion promoter disposed thereon.

According to yet another preferred aspect of the tire, the lightweight foam comprises at least two different materials.

According to still another preferred aspect of the tire, the shear band structure is a belt structure.

According to yet another preferred aspect of the tire, the lightweight foam material is an acoustic absorbing material.

According to still another preferred aspect of the tire, the lightweight foam material is an open cell acoustic insulation material engineered to target specific acoustic frequencies.

According to yet another preferred aspect of the tire, the lightweight foam material is an open cell structure with a complex pore geometry for effectively absorbing airborne sound.

According to yet another preferred aspect of the tire, the foam material has a density in a range of from 0.02 g/cm³ to 0.8 g/cm³ or in a range of from 0.03 g/cm³ to 0.3 g/cm³.

According to yet another preferred aspect of the tire, the foam material has an axial width in the tire in a range of from 2 to 20 mm, preferably 4 to 12 mm, and a radial height in the tire in a range of from 10 to 50 mm, preferably 15 to 30 mm.

### Definitions

"Apex" or "bead filler apex" means a filler located radially above the bead core and preferably between the plies and the turnup plies.

"Axial" and "Axially" mean the lines or directions that are parallel to the axis of rotation of the tire.

"Bead" or "Bead Core" generally means that part of the tire comprising a radially inner annular tensile member that is associated with holding the tire to the rim. The bead may be wrapped by ply cords and shaped, with or without other reinforcement elements such as flippers, chippers, apexes or fillers, toe guards and chafers thereby forming the bead region or bead structure of the tire.

"Cenosphere" means a lightweight, inert, hollow sphere made, for example, largely of silica and alumina and filled with air or inert gas (e.g., produced as a byproduct of coal combustion at thermal power plants).

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Lateral" means a direction parallel to the axial direction.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of another bead region for use with present invention; and
FIG. 4 represents a schematic detail of an example bead region in accordance with the present invention.

### Detailed Description of Example Embodiments of the Invention

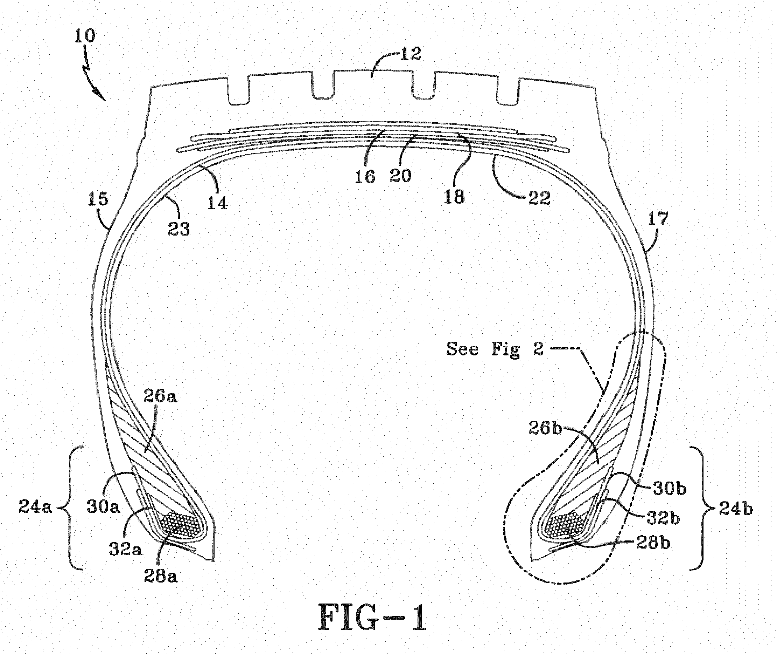

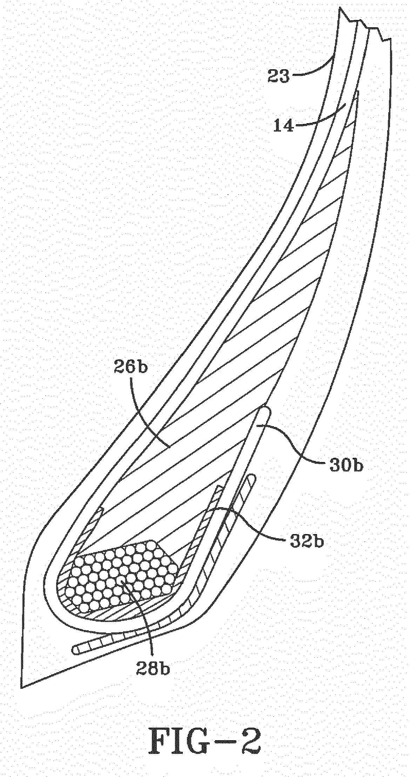

FIG. 1 shows an example tire 10 for use with reinforcing components in accordance with the present invention. Such components may be used in pneumatic and non-pneumatic tires. The example tire 10 has been described in US-B-7,992,611, herein incorporated in its entirety by reference. The example tire 10 has a tread 12, an inner liner 23, a belt structure 16 comprising belts 18, 20, a carcass 22 preferably with a single carcass ply 14, two sidewalls 15, 17, and two bead regions or bead structures 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2. The beads 28a, 28b (or bead cores) together with the bead filler apexes 26a, 26b and optional further reinforcement elements such as flippers, toe guards and chafers form the bead structures 24a, 24b of the tire 10.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b.

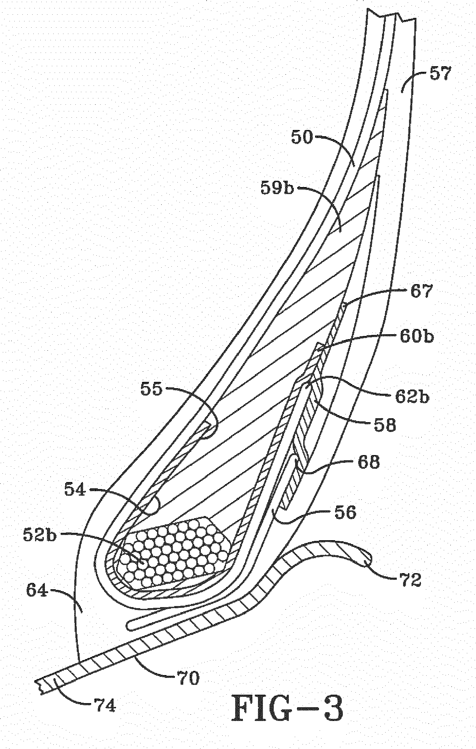

FIG. 3 shows, in cross-sectional view, the bead region or bead structure of another example tire for use with the reinforcing components in accordance with the present invention. A carcass ply 50 wraps around a bead or bead core 52b and is separated from the bead by a flipper 54. The flipper 54 may be a layer of fabric disposed around the bead 52b and inward of a portion of the carcass ply 50 which turns up under the bead. The flipper 54 may have physical properties (such as shearing modulus of elasticity) intermediate to those of a rigid metal bead 52b and a less rigid carcass ply 50. The flipper 54 therefore may serve as an active strain-relieving layer separating the bead 52b from the carcass ply 50. The carcass ply 50 may be reinforced with metal.

The example tire of FIG. 3 also may have a chipper 56 located in the bead area for reinforcing the bead area and stabilizing the axially inwardmost part of the sidewall 57. The flipper 54 and chipper 56, along with the patch 58 uniting them, are discussed separately below, and then in operational conjunction with one another.

The flipper 54 wraps around the bead 52b and extends radially outward into the sidewall regions of the example tire. The axially inward portion 55 of the flipper 54 terminates within the bead filler apex 59b. The axially outward portion 60b of the flipper 54 lies radially beyond a turnup end 62b, which itself is located radially beyond the radially outermost reach of the chipper 56 (discussed separately below). The axially outwardmost portions 62b of the turnup end 62b of the carcass ply 50 may extend radially outward about 15-30 millimeters beyond the top of a wheel rim flange 72 of a wheel rim 70.

As shown in FIG. 3, the flipper 54 may be deployed about the bead 52b which is itself circumferentially disposed within the example tire. An axially inward portion 55 of the flipper 54 may extend radially outward from the bead 52b to a location approximately axially adjacent to the top of the wheel rim flange 72 of the wheel rim 70. On an axially outward side, the flipper 54 may extend radially outward from the bead 52b to an end 60b above the wheel rim flange 72. The radially outermost reach of the end 60b of the flipper 54 may extend between 7-15 millimeters beyond the radially outermost reach of the turnup end 62b. The flipper 54 may be termed "active" because it actively absorbs (i.e. during tire deflection) differential strains between the relatively rigid bead 52b and the relatively less rigid carcass ply 50.

The chipper 56 may be disposed adjacent to the portion of the carcass ply 50 that is wrapped around the bead 52b. More specifically, the chipper 56 may be disposed on the opposite side of the portion of the carcass ply 50 from the flipper 54. The axially inwardmost portion of the chipper 56 lies in the portion of the bead region that, when the tire is mounted on the wheel rim 70, would lie closest to a circularly cylindrical part 74 of the wheel rim. The axially and radially outwardmost portion of the chipper 56 lies in the portion of the bead region that, when the tire is mounted on the wheel rim 70, would lie axially inward of the circular portion of the wheel rim 70, being separated from the circular portion of the wheel rim by tire rubber such as a toe guard 64.

In other words, as can be seen in FIG. 3, the chipper 56 is disposed circumferentially about the radially inwardmost portion of the carcass ply 50 where the carcass ply turns up under the bead 52b. The chipper 56 may extend radially outward, being more or less parallel with the turned up end 62b of the carcass ply 50.

The chipper 56 protects the portion of the carcass ply 50 that wraps around the bead 52b from the strains in the rubber that separates the chipper from the wheel rim 70. The chipper 56 reinforces the bead area and stabilizes the radially inwardmost part of the sidewall 57. In other words, the chipper 56 may absorb deformation in a way that minimizes the transmission of stress-induced shearing strains that arise inward from the wheel rim 70, through the toe guard 64, to the turned up portion 62b of the carcass ply 50, where the chipper is most immediately adjacent to the rigid bead 52b.

The patch 58 shown in FIG. 3 is circumferentially disposed about the bead 52b in such a way as to overlie the radially outermost regions 68 of the chipper 56 and the turned up ends 62b of the carcass ply 50. The patch 58 performs a function similar to that of those of the chipper 56 and the active flipper 54. More specifically, the patch 58 may absorb shearing stresses in the rubber parts which might otherwise induce separation of the flexible rubber from the less flexible material of the chipper 56 and the carcass ply 50. The patch 58 may, for example, be made of nylon fabric. The radially outwardmost portion 67 of the patch 58 may reach to a minimum level such as extending by at least 5 mm above the upper end 60b of the flipper 54, and preferably 10-15 mm above. The radially inwardmost portion of the patch 58 may overlap about 10 mm with the chipper 56.

The net effect of the incorporation of the flipper 54 and the chipper 56 is to provide strain buffers that relieve or absorb differential shearing strains that otherwise, were the flippers and chippers not present, could lead to separation of the adjacent materials that have disparate shearing moduli of elasticity. Furthermore, this reinforced construction may increase durability of the tire by means of the incorporation of a smaller number of components than for standard constructions with gum strips.

One or more of the structures described above, such as the belts 18, 20, apexes 26a, 26b, 59b, flippers 32a, 32b, 54, chippers 56, patch 58, and toeguard 64, are constructed of a material of a relatively light weight. Such lightweight material may replace rubber parts or components 18, 20, 26a, 26b, 32a, 32b, 54, 59b, 56, 58, 64.

For example and in accordance with the invention, a conventional apex 26a, 26b, 59b is replaced by an apex 100b. This apex 100b comprises a foam material. This lightweight foam material is preferably a polyester-terephthalate (PET) foam, a polyethylene-terehthalate foam, a polyurethane foam, a phenolic foam, a polystyrene foam, a polyisocyanurate foam, a syntactic foam synthesized by filling metal, polymers, resins, and/or a ceramic matrix with hollow particles called microballoons (microspheres), and/or other suitable material. The microspheres may be a wide variety of sizes and materials, including glass, cenospheres, carbon, and/or polymers. Such a syntactic foam may meet required mechanical properties while also being very lightweight.

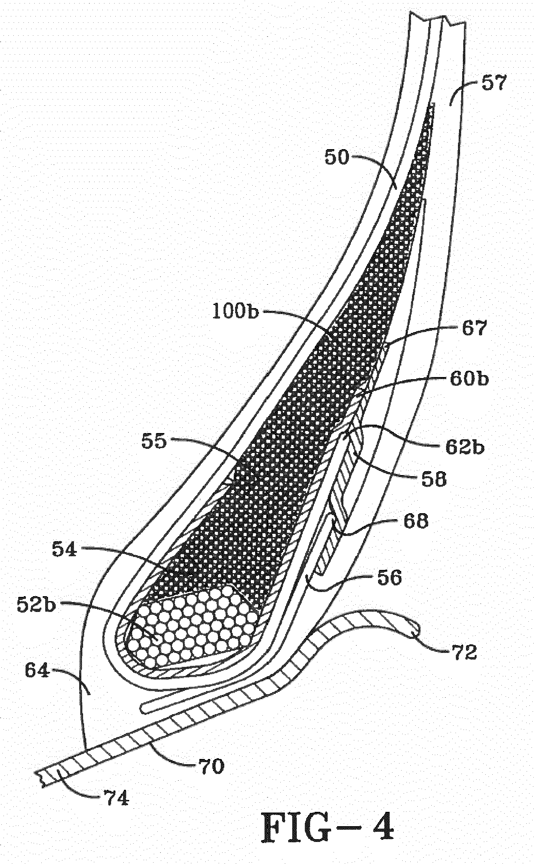

The apex 100b defines a lightweight structure while still having sufficient strength and stiffness that may exceed that of conventional apex compounds. Significant weight reduction may be achieved allowing a tire with such an apex 100b (FIG. 4) to be less dependent on rubber compounds by replacing the current configuration of apex thereby reducing the weight of the tire overall. The lightweight material may also be used in other areas of the tire, such as, for example, in components 18, 20, 32a, 32b, 54, 56, 58, 64 to the extent that the properties of the lightweight material allow the construction of such a tire architecture.

Fatigue and strength vs. weight ratio of the lightweight foam is similar or greater than the conventional component materials. The lightweight material may also reduce overall hysteresis of the tire overall and thereby reduce rolling resistance. Such an apex 100b may reduce cost and be constructed of a recycled material, such as PET.

One example of the lightweight material may be a conventional acoustic absorber designed for use in a variety of different acoustic applications, such as that disclosed in US-B-9, 174,363, incorporated herein by reference in its entirety.

Preferably, the lightweight material is a high performance sound absorbing barrier with both vibration damping and vibration de-coupling properties.

Preferably, the lightweight material is an open cell acoustic insulation material engineered to target specific acoustic frequencies. The open cell structure may have a complex pore geometry for effectively absorbing airborne sound. The lightweight material may have a high density with high resistance to flow.

The apex 100b in accordance with the present invention may thus help to reduce rolling resistance of the tire.

Such structures are significantly lighter, but still have sufficient strength and stiffness to meet or exceed tire performance requirements. As stated above, this approach may thus achieve significant weight reduction and be less dependent on rubber by replacing rubber in these structures with the spaces or cells of the lightweight material. Acoustic applications of the lightweight material have demonstrated excellent mechanical properties at very light weights.

## Claims

1. A tire having an axis of rotation, the tire comprising two bead structures (24a, 24b) for attachment to a vehicle rim (70), a carcass-like structure (22), a tread (12) disposed radially outward of the carcass-like structure (22) and a shear band structure (16) disposed radially between the carcass-like structure (22) and the tread (12), at least one or both of the two bead structures (24a, 24b) including at least one layer of a foam material (100b).

2. The tire as set forth in claim 1 wherein the foam material (100b) has open cells which are preferably maintained by axially extending walls.

3. The tire as set forth in claim 1 or 2 wherein the at least one layer of foam material (100b) further comprises an adhesion promoter disposed thereon.

4. The tire as set forth in at least one of the previous claims wherein the foam material (100b) comprises at least two different materials.

5. The tire as set forth in at least one of the previous claims wherein the shear band structure (16) is a belt structure.

6. The tire as set forth in at least one of the previous claims wherein the foam material (100b) is an acoustic absorbing foam material.

7. The tire as set forth in at least one of the previous claims wherein the foam material (100b) is an open cell acoustic insulation material engineered to target audible acoustic frequencies.

8. The tire as set forth in at least one of the previous claims wherein the foam material (100b) is an open cell structure with a pore geometry for absorbing airborne sound.

9. The tire as set forth in at least one of the previous claims wherein the foam material (100b) has a substantially triangular shape and/or the shape of a tire apex.

10. The tire as set forth in at least one of the previous claims wherein the foam material (100b) extends from an inextensible annular bead (52b) radially upwards.

11. The tire as set forth in at least one of the previous claims wherein the foam material (100b) has a density in a range of from 0.02 g/cm³ to 0.8 g/cm³ or in a range of from 0.03 g/cm³ to 0.3 g/cm³.

12. The tire as set forth in at least one of the previous claims wherein the foam material (100b) has an axial width in the tire (10) in a range of from 2 to 20 mm, preferably 4 to 12 mm, and a radial height in the tire (10) in a range of from 10 to 50 mm, preferably 15 to 30 mm.

13. The tire as set forth in at least one of the previous claims wherein the carcass-like structure (22) is wound about the two bead structures;

14. The tire as set forth in at least one of the previous claims wherein the tire (10) is a pneumatic tire.

15. The tire as set forth in at least one of the previous claims 1 to 13 wherein the tire (10) is a non-pneumatic tire.
